# EUROPÄISCHE PATENTSCHRIFT

(11) **EP 2 442 058 B1**
(45) Veröffentlichungstag und Bekanntmachung des Hinweises auf die Patenterteilung: **23.08.2017**
(21) Anmeldenummer: 11185043.4
(22) Anmeldetag: 13.10.2011
(51) Int. Cl.: F28D 1/053, F28D 20/02, F28F 9/02

(54) **Wärmeübertrager mit Kältespeicherrohren**
Heat exchanger with cold storage tubes
Echangeur de chaleur avec des tuyaux à stockage de froid

(30) Priorität: 13.10.2010 DE 102010042391
(43) Veröffentlichungstag der Anmeldung: 18.04.2012
(73) Patentinhaber: MAHLE Behr GmbH & Co. KG, 70469 Stuttgart (DE)
(72) Erfinder: Seewald, Wolfgang, 70190 Stuttgart (DE); Walter, Christoph, 70469 Stuttgart (DE)
(74) Vertreter: Grauel, Andreas

(56) Entgegenhaltungen:
- EP-A1- 1 050 732
- EP-A2- 2 293 001
- DE-A1-102006 028 017
- DE-A1-102006 042 789
- FR-A- 1 405 960
- US-A1- 2002 036 078

## Beschreibung

Die Erfindung betrifft einen Wärmeübertrager nach dem Oberbegriff des Patentanspruchs 1.

Es ist ein Ziel der Kraftfahrzeughersteller, den Kraftstoffverbrauch des Fahrzeugs zu reduzieren. Eine Maßnahme zur Reduzierung des Kraftstoffverbrauchs ist das Abschalten des Motors bei vorübergehendem Stillstand, beispielsweise beim Halten an einer Ampel. Dieses vorübergehende Abschalten des Motors wird auch Idle-stop-Betrieb genannt. Diese Maßnahme wird bei heutigen verbrauchsarmen Fahrzeugen, wie beispielsweise bei dem sogenannten Dreiliter-Fahrzeug, bereits eingesetzt. Bei Fahrzeugen, die über den Idle-stop-Betriebsmodus verfügen, ist im innerstädtischen Verkehr ca. 25-30 % der Fahrzeit der Motor ausgeschaltet. Um dennoch den reibungslosen Betrieb einer Klimaanlage gewährleisten zu können wurden in den letzten Jahren spezielle Wärmeübertrager entwickelt.

Beispielsweise offenbart die DE 10 2006 028 017 A1 einen Wärmeübertrager, insbesondere einen Verdampfer für eine Kraftfahrzeug-Klimaanlage. Zum Abkühlen von zu konditionierender Luft für den Innenraum ist der Wärmeübertrager mit einer Mehrzahl nebeneinanderliegend angeordneter, kältemittelführender Rohre und mit wenigstens einem Kältespeicher, in welchem ein Kältespeichermedium vorgesehen ist, ausgestattet. Der Verdampfer weist zwei parallel zueinander angeordnete und über die gesamte Breite verlaufende Bereiche auf. Der erste Bereich entspricht in seinem Aufbau einem herkömmlichen Verdampfer, der Kältespeicher ist in einem eigenständigen zweiten Bereich angeordnet, der von zumindest einem Teil des Kältemittelstroms durchströmbar ist, welcher auch zumindest ein Teil des ersten Bereichs durchströmt. Der erste und der zweite Bereich sind durch mindestens eine Überströmöffnung miteinander verbunden. Über die Überströmöffnung strömt zumindest ein Teilstrom von Kältemittel von einem Bereich in den anderen Bereich über, d.h. in beiden Bereichen strömt Kältemittel.

Die aus dem Stand der Technik bekannten Wärmeübertrager lassen jedoch noch Wünsche offen.

Der Erfindung liegt die Aufgabe zugrunde, einen verbesserten Wärmeübertrager zu schaffen, welcher insbesondere im Hinblick auf mögliche interne Leckagen einen zuverlässigen Betrieb gewährleistet.

Diese Aufgabe wird gelöst durch einen Wärmeübertrager mit den Merkmalen des Anspruchs 1. Vorteilhafte Ausgestaltungen sind Gegenstand der Unteransprüche.

Erfindungsgemäß ist der Wärmeübertrager mit mehreren Aufnahmebereiche bildenden Sammlern dadurch gekennzeichnet, dass die Aufnahmebereiche dergestalt nebeneinander angeordnet sind, dass der Deckelabschnitt eines zweiten Sammlers benachbart zum Bodenabschnitt eines ersten Sammlers verläuft, wobei zwischen dem Deckelabschnitt des zweiten Sammlers und dem benachbarten Bodenabschnitt des ersten Sammlers zumindest ein als Leckagekanal genutzter Freiraum gebildet ist. Durch das Vorsehen eines Leckagekanals kann sichergestellt werden, dass bei einer kältemittelseitigen Leckage kein Kältemittel in den Speicherteil übertreten kann und somit eine Vermischung von Kältemittel und dem im Kältespeicher geführten Latentmedium zuverlässig verhindert werden kann. Ferner wird somit ein Wärmeübertrager zur Verfügung gestellt, der keine direkte Lötnahtverbindung zwischen Kältemittel und Latentmedium aufweist.

Bei dem Latent- oder Speichermedium kann es sich beispielsweise um ein PCM-Material (phase change material), das bevorzugt kongruent schmelzende Medien, insbesondere Decanol, Tetra-, Penta- oder Hexadecan, Li-ClO33H2O, wässrige Salzlösungen oder organische Hydrate enthält oder hieraus gebildet ist, handeln. Im Speichermedium können auch Keimbildner vorgesehen sein, welche die Kristallbildung beschleunigen. Die ersten und zweiten Sammler sind als an sich geschlossene Behälter ausgebildet, wobei beispielsweise die ersten zu der Verdampfereinheit gehörenden Sammler mit entsprechenden Kältemitteleintrittsöfifnungen und Kältemittelaustrittsöffnungen versehen sind. Die zweiten zum Kältespeicher gehörenden Sammler können ebenfalls mit entsprechenden Ab- oder Zuläufen versehen sein. Der Wärmeübertrager kann mit einer Mehrzahl von ersten und zweiten Sammlern versehen sein. Aus der EP 1 050 732 A1 und der nachveröffentlichten EP 2 293 001 A2 ist es bekannt, einen Leckagekanal durch eine zumindest geringfügige Beabstandung des Deckeiabschnitts des zweiten Sammlers zum benachbart angeordneten Bodenabschnitt des ersten Sammlers zu bilden. Die benachbart zueinander angeordneten Deckel- und Bodenabschnitte erfüllen somit im Wesentlichen die Funktion eines "doppelten Bodens" bzw. es gibt sowohl einen zum Sammler der Verdampfereinheit gehörenden Bodenabschnitt als auch einen zum Sammler des Kältespeichers gehörenden Deckelabschnitt. Zwischen dem jeweiligen Deckel- und Bodenabschnitt einer jeden Sammleranordnung kann beispielsweise das durch eine Leckage (beispielsweise hervorgerufen durch eine undichte Schweiß- oder Lötstelle oder Materialermüdung) austretende Medium abgeleitet bzw. gesammelt werden. Ein solcher Leckagekanal kann sich im Wesentlichen über die gesamte Breite des Verdampfers (wobei unter Breite bei diesem Ausführungsbeispiel die grundsätzliche Längserstreckung des Verdampfers zu verstehen ist) erstrecken. Erfindungsgemäß ist vorgesehen, dass der Leckagekanal durch zumindest eine Ausformung im Deckelabschnitt des zweiten Sammlers oder im Bodenabschnitt des ersten Sammlers gebildet werden kann, wobei der Deckelabschnitt des zweiten Sammlers im Wesentlichen bündig am Bodenabschnitt des ersten Sammlers anliegt und beispielsweise fest mit diesem verbunden werden kann. Auch hier wird die grundsätzliche Funktion eines "doppelten Bodens" umgesetzt.

Beispielsweise kann die Ausformung bzw. der durch die Ausformung gebildete Leckagekanal eine im Querschnitt zumindest bereichsweise gewölbte Ausgestaltung aufweisen. Grundsätzlich ist jedoch jeder weitere Querschnitt geeignet, der das zuverlässige Ableiten bzw. Sammeln eines durch eine Leckage austretenden Mediums gewährleistet.

Die Ausformung kann beispielsweise dergestalt angeordnet bzw. ausgeformt sein, das die Ausformung zumindest bereichsweise in den Aufnahmeraum des zweiten Sammlers oder ersten Sammlers hineinragen kann.

Vorzugsweise kann dabei jedem kältemittelführenden Rohr mündungsseitig eine separate Ausformung bzw. ein separater Leckagekanal zugeordnet sein. Vorzugsweise können die Leckagekanäle bereits während des Fertigungsprozesses des zweiten Sammlers bzw. des Deckelabschnitts in diesen eingearbeitet werden. Dies kann beispielsweise mittels eines Stanz- oder Einprägevorgangs geschehen.

Vorzugsweise kann der durch die Ausformung gebildete Leckagekanal im Wesentlichen parallel zur Luftstromrichtung des Verdampfers bzw. parallel zur Einbaulage der kältemittelführenden Rohre verlaufen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Es zeigen:
- **Fig. 1**: einen schematisch dargestellten Wärmeübertrager;
- **Fig. 2**: den vergrößerten Teilbereich X gem. Fig.1;
- **Fig. 3**: den vergrößerten Teilbereich Y gem. Fig. 1;
- **Fig. 4**: die schematisch dargestellte Teilansicht einer Ausführungsform eines erfindungsgemäßen Wärmeübertragers.

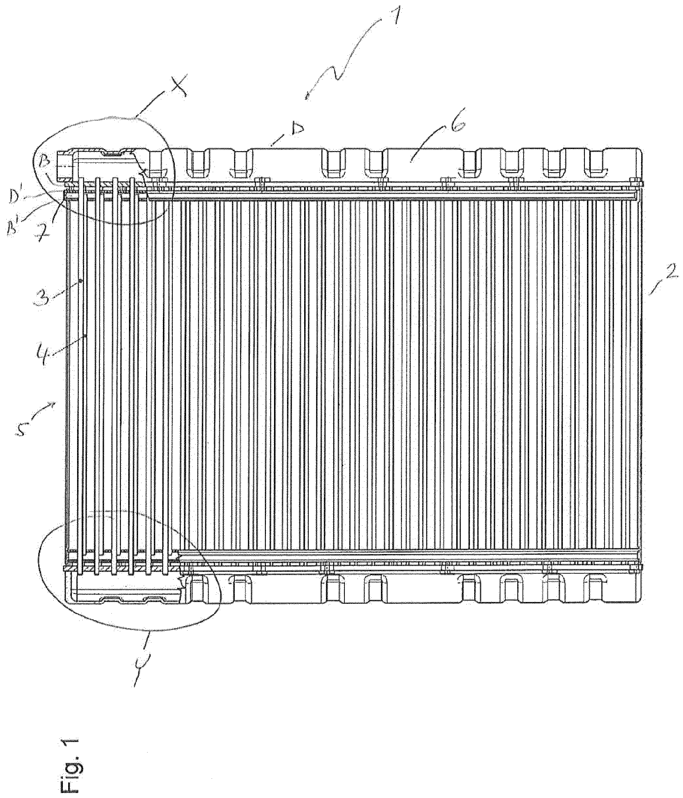

Fig. 1 zeigt einen schematisch dargestellten Wärmeübertrager 1, insbesondere Verdampfer. Der Wärmeübertrager 1 weist eine Mehrzahl zu einer Verdampfereinheit 2 gehörender kältemittelführender Rohre 3 und einen aus mehreren Kältespeicherrohren 4 gebildeten Kältespeicher 5 auf. Der Kältespeicher 5 dient zur Aufnahme eines Latentmediums. Bei der hier gezeigten Ausführungsform ist der Kältespeicher 5 dergestalt ausgebildet, dass das Latentmedium in der abströmseitigen zweiten Reihe des Verdampfers angeordnet ist.

Die kältemittelführenden Rohre 3 und die Kältespeicherrohre 4 sind wärmeleitend miteinander verbunden, wobei die kältemittelführenden Rohre 3 in der Verdampfereinheit 2 zugeordneten ersten Sammlern 6 und die Kältespeicherrohre 4 in dem Kältespeicher 5 zugeordneten zweiten Sammlern 7 münden, wobei jeder Sammler 6, 7 einen durch zumindest einen Boden- und einen Deckenabschnitt B, B', D, D' definierten Aufnahmebereich 8, 9 aufweist (gleiche Bauteile tragen gleiche Bezugszeichen).

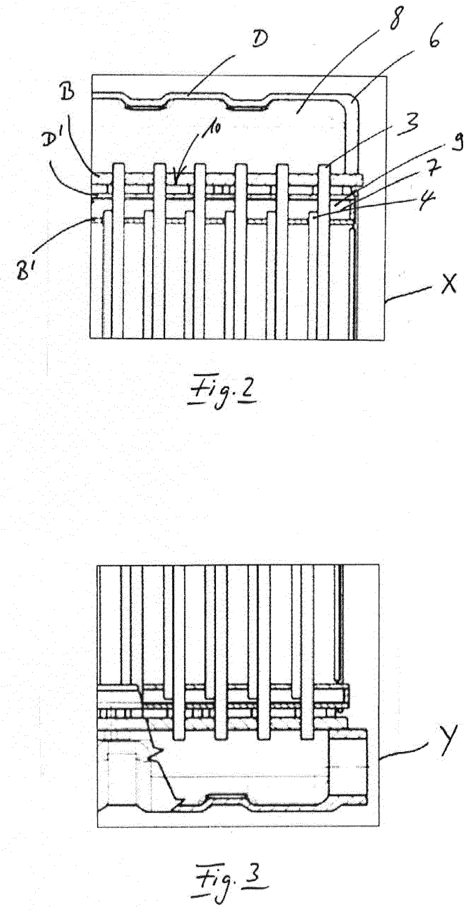

Fig. 2 zeigt den vergrößert dargestellten Teilbereich X gem. Fig. 1. Zu erkennen ist der Sammler 6 der einen Aufnahmebereich 8 definiert, wobei im Aufnahmebereich 8 die kältemittelführenden Rohre 3 münden. Zu erkennen ist ferner der Sammler 7 der den Aufnahmebereich 9 definiert, wobei im Aufnahmebereich 9 die verkürzt ausgebildeten Kältespeicherrohre 4 münden. Jeder Sammler 6, 7 bildet einen in sich geschlossenen Aufnahmebereich 8, 9.

Jeder Sammler 6, 7 weist einen oberen Deckelabschnitt D, D' sowie einen unteren Bodenabschnitt B, B' auf. Der Bodenabschnitt B des Sammlers 6 ist beabstandet zum Deckenabschnitt D' des Sammlers 7 angeordnet. Durch die Beabstandung bildet sich zwischen dem Bodenabschnitt B und dem Deckelabschnitt D' ein als Leckagekanal 10 genutzter Freiraum aus. Durch die im Wesentlichen räumlich voneinander getrennten Sammler 6, 7 bzw. durch das Vorsehen des Leckagekanals 10 kann eine Vermischung von Kältemittel und Latentmedium, im Falle einer Leckage, verhindert werden, da das ausgetretene Medium über den Leckagekanal 10 abgeleitet bzw. in diesem gesammelt werden kann. Fig. 3 zeigt den vergrößert dargestellten Teilbereich Y gem. Fig. 1. Da die Anordnung bzw. Funktion dem unter Fig. 2 geschilderten Teilbereich X entspricht, wird auf eine gesonderte Beschreibung des Teilbereichs Y verzichtet.

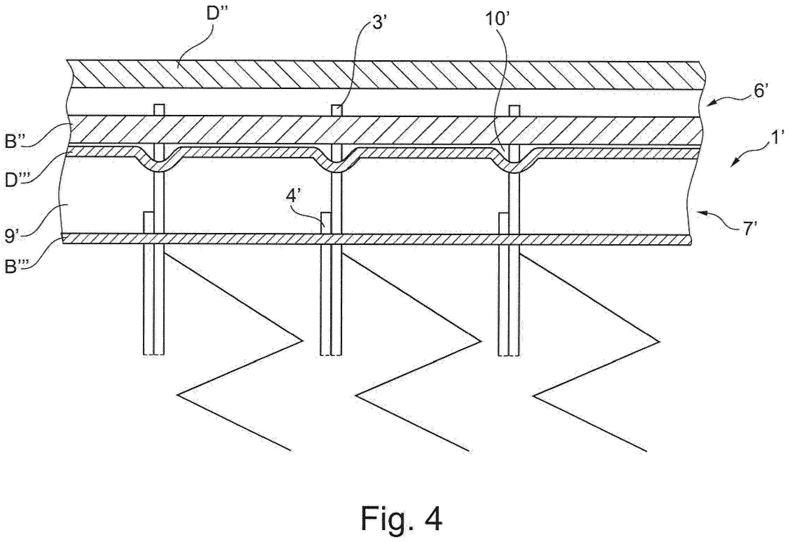

Fig. 4 zeigt in Teilansicht eine Ausführungsform eines erfindungsgemäßen Wärmeübetragers 1'. Zu erkennen ist ein erster Sammler 6' in den die kältemittelführenden Rohre 3' münden. Der Sammler 6' weist einen oberen Deckelabschnitt D" und einen unteren Bodenabschnitt B" auf, zwischen denen sich der Aufnahmeraum 8' definiert.

Zu erkennen ist ferner ein zweiter Sammler 7' in den die Kältespeicherrohre 4' münden. Der Sammler 7' weist ebenfalls einen oberen Deckenabschnitt D''' und einen unteren Bodenabschnitt B''' auf, zwischen denen sich der Aufnahmebereich 9' definiert. Der obere Deckenabschnitt D''' des Sammlers 7' liegt im Wesentlichen bündig am Bodenabschnitt B" des Sammlers 6' an. Zwischen dem oberen Deckelabschnitt D''' und dem unteren Bodenabschnitt B" sind mehrere als Leckagekanäle 10' genutzte Freiräume gebildet.

Die Leckagekanäle 10' werden durch im oberen Deckelabschnitt D''' eingearbeiteten Ausformungen gebildet. Jedem kältemittelführenden Rohr 3' ist mündungsseitig eine Ausformung bzw. ein Leckagekanal 10' zugeordnet. Die Ausformung weist einen im Wesentlichen gewölbt ausgebildeten Querschnitt auf, der zumindest bereichsweise in den Aufnahmebereich 9' des Sammlers 7' hineinragt.

## Patentansprüche

1. Wärmeübertrager (1, 1'), insbesondere Verdampfer, insbesondere für eine Kraftfahrzeug-Klimaanlage, mit einer Mehrzahl zu einer Verdampfereinheit (2) gehörender, nebeneinanderliegend angeordneter, kältemittelführender Rohre (3, 3') und mit wenigstens einem aus mehreren Kältespeicherrohren (4, 4') gebildeten Kältespeicher (5), wobei in den Kältespeicherrohren (4, 4') ein Kältespeicher- bzw. Latentmedium vorgesehen ist, und wobei die kältemittelführenden Rohre (3, 3') und die Kältespeicherrohre (4, 4') wärmeleitend miteinander verbunden sind, und wobei die kältemittelführenden Rohre (3, 3') in der Verdampfereinheit (2) zugeordneten ersten Sammlern (6, 6') und die Kältespeicherrohre (4, 4') in dem Kältespeicher (5) zugeordneten zweiten Sammlern (7, 7') münden, wobei jeder Sammler (6, 6', 7, 7') einen durch zumindest einen Boden- und einen Deckelabschnitt (B, B', B", B''', D, D', D", D''') definierten Aufnahmebereich (8, 8', 9, 9') aufweist, wobei die Aufnahmebereiche (8, 8', 9, 9') dergestalt nebeneinander angeordnet sind, dass der Deckelabschnitt (D, D', D", D''') eines zweiten Sammlers (7, 7') benachbart zum Bodenabschnitt (B, B', B", B''') eines ersten Sammlers (6, 6') verläuft, **dadurch gekennzeichnet, dass** zwischen dem Deckelabschnitt (D, D', D", D''') des zweiten Sammlers (7, 7') und dem benachbarten Bodenabschnitt (B, B', B", B''') des ersten Sammlers (6, 6') zumindest ein als Leckagekanal (10, 10') genutzter Freiraum gebildet ist, wobei der Leckagekanal (10, 10') durch zumindest eine Ausformung im Deckelabschnitt (D, D', D", D''') des zweiten Sammlers (7, 7') gebildet wird, wobei der Deckelabschnitt (D, D', D", D''') des zweiten Sammlers (7, 7') im Wesentlichen bündig am Bodenabschnitt (B, B', B", B''') des ersten Sammlers (6, 6') anliegt oder der Leckagekanal (10, 10') durch zumindest eine Ausformung im Bodenabschnitt (B, B', B", B''') des ersten Sammlers (6, 6') gebildet wird, wobei der Deckelabschnitt (D, D', D", D''') des zweiten Sammlers (7, 7') im Wesentlichen bündig am Bodenabschnitt (B, B', B", B''') des ersten Sammlers (6, 6') anliegt.

2. Wärmeübertrager nach Anspruch 1, **dadurch gekennzeichnet, dass** die Ausformung bzw. der durch die Ausformung gebildete Leckagekanal (10, 10') eine im Querschnitt zumindest bereichsweise gewölbte Ausgestaltung aufweist.

3. Wärmeübertrager nach einem der vorhergehenden Ansprüche 1 oder 2, **dadurch gekennzeichnet, dass** der Leckagekanal (10, 10') bzw. die Ausformung zumindest bereichsweise in den Aufnahmeraum (9, 9') des zweiten Sammlers (7, 7') oder des ersten Sammlers (6, 6') hineinragt.

4. Wärmeübertrager nach einem der vorhergehenden Ansprüche 1 bis 3, **dadurch gekennzeichnet, dass** jedem kältemittelführenden Rohr (3, 3') mündungsseitig eine Ausformung bzw. ein Leckagekanal (10, 10') zugeordnet ist.

5. Wärmeübertrager nach zumindest einem der vorhergehenden Ansprüche 1 bis 4, **dadurch gekennzeichnet, dass** der durch die Ausformung gebildete Leckagekanal (10, 10) im Wesentlichen parallel zur Luftstromrichtung des Verdampfers verläuft.

## Claims

1. A heat exchanger (1, 1'), in particular an evaporator, in particular for a vehicle air-conditioning system, with a plurality of tubes (3, 3') which belong to an evaporator unit (2), are adjacently arranged and carry refrigerant and with at least one cold reservoir (5) which is formed of several cold reservoir tubes (4, 4'), wherein a cold reservoir or latent medium is provided in the cold reservoir tubes (4, 4') and wherein the refrigerant-carrying tubes (3, 3') and the cold reservoir tubes (4, 4') are connected to one another in a heat-conducting manner, and wherein the refrigerant-carrying tubes (3, 3') end in first collectors (6, 6') assigned to the evaporator unit (2) and the cold reservoir tubes (4, 4') end in second collectors (7, 7') assigned to the cold reservoir (5), wherein each collector (6, 6', 7, 7') has a receiving area (8, 8', 9, 9') defined by at least one bottom and one cover portion (B, B', B", B"', D, D' , D" , D'''), wherein the receiving areas (8, 8', 9, 9') are arranged next to one another in such a way that the cover portion (D, D', D" , D''') of a second collector (7, 7') runs adjacent to the bottom portion (B, B', B" , B''') of a first collector (6, 6'), **characterised in that** at least one free space used as leakage channel (10, 10') is formed between the cover portion (D, D', D", D''') of the second collector (7, 7') and the adjacent bottom portion (B, B' , B" , B''') of the first collector (6, 6'), wherein the leakage channel (10, 10') is formed by at least one formation in the cover portion (D, D', D" , D''') of the second collector (7, 7'), wherein the cover portion (D, D', D'', D''') of the second collector (7, 7') is substantially flush with the bottom portion (B, B', B'', B''') of the first collector (6, 6') or the leakage channel (10, 10') is formed by at least one formation in the bottom portion (B, B', B" , B''') of the first collector (6, 6'), wherein the cover portion (D, D' , D" , D''') of the second collector (7, 7') is substantially flush with the bottom portion (B, B', B" , B''') of the first collector (6, 6').

2. The heat exchanger according to claim 1, **characterised in that** the formation or the leakage channel (10, 10') formed by the formation has a configuration whose cross-section is curved at least in sections.

3. The heat exchanger according to one of the preceding claims 1 or 2, **characterised in that** the leakage channel (10, 10') or the formation protrudes into the receiving area (9, 9') of the second collector (7, 7') or of the first collector (6, 6') at least in sections.

4. The heat exchanger according to one of the preceding claims 1 to 3, **characterised in that** a formation or a leakage channel (10, 10') is assigned on the mouth-side of each refrigerant-carrying tube (3, 3')

5. The heat exchanger according to at least one of the preceding claims 1 to 4, **characterised in that** the leakage channel (10, 10') formed by the formation runs substantially parallel to the air flow direction of the evaporator.

## Revendications

1. Echangeur de chaleur (1, 1'), en particulier évaporateur, en particulier pour un système de climatisation d'un véhicule automobile, ledit évaporateur comprenant une pluralité de tubes (3, 3') guidant un fluide frigorigène, lesdits tubes faisant partie d'un ensemble (2) formant l'évaporateur et disposés en étant placés les uns à côté des autres, ledit évaporateur comprenant également au moins un accumulateur de froid (5) formé par plusieurs tubes accumulateurs de froid (4, 4'), où il est prévu, dans les tubes accumulateurs de froid (4, 4'), un milieu de l'accumulateur de froid ou un milieu latent, et où les tubes (3, 3') guidant le fluide frigorigène et les tubes accumulateurs de froid (4, 4') sont assemblés les uns aux autres de manière thermoconductrice, et où les tubes (3, 3') guidant le fluide frigorigène débouchent dans des premiers collecteurs (6, 6') associés à l'ensemble (2) formant l'évaporateur, et les tubes accumulateurs de froid (4, 4') débouchent dans des deuxièmes collecteurs (7, 7') associés à l'accumulateur de froid (5), où chaque collecteur (6, 6', 7, 7') présente une zone de réception (8, 8', 9, 9') définie au moins par une partie (B, B', B'', B''') formant le fond et par une partie (D, D', D'', D''') formant le couvercle, où les zones de réception (8, 8', 9, 9') sont disposées les unes à côté des autres, de manière telle que la partie (D, D', D" , D''') formant le couvercle d'un deuxième collecteur (7, 7') s'étende à proximité de la partie (B, B', B'', B''') formant le fond d'un premier collecteur (6, 6'), **caractérisé en ce qu'**au moins un espace libre utilisé comme canal de fuite (10, 10') est formé entre la partie (D, D', D", D''') formant le couvercle du deuxième collecteur (7, 7') et la partie adjacente (B, B', B", B''') formant le fond du premier collecteur (6, 6'), où le canal de fuite (10, 10') est formé par au moins une déformation en saillie dans la partie (D, D', D", D''') formant le couvercle du deuxième collecteur (7, 7'), où la partie (D, D', D", D''') formant le couvercle du deuxième collecteur (7, 7') vient en appui, pratiquement de manière affleurante, sur la partie (B, B', B", B''') formant le fond du premier collecteur (6, 6'), ou bien le canal de fuite (10, 10') est formé par au moins une déformation en saillie dans la partie (B, B', B", B''') formant le fond du premier collecteur (6, 6'), où la partie (D, D', D", D''') formant le couvercle du deuxième collecteur (7, 7') vient en appui, pratiquement de manière affleurante, sur la partie (B, B', B", B''') formant le fond du premier collecteur (6, 6').

2. Echangeur de chaleur selon la revendication 1, **caractérisé en ce que** la déformation en saillie ou le canal de fuite (10, 10') formé par la déformation en saillie présente, en section, une configuration au moins partiellement bombée.

3. Echangeur de chaleur selon l'une des revendications précédentes 1 ou 2, **caractérisé en ce que** le canal de fuite (10, 10') ou la déformation en saillie pénètre au moins partiellement dans l'espace de réception (9, 9') du deuxième collecteur (7, 7') ou du premier collecteur (6, 6').

4. Echangeur de chaleur selon l'une quelconque des revendications précédentes 1 à 3, **caractérisé en ce qu'**une déformation en saillie ou un canal de fuite (10, 10') est associé(e), côté embouchure, à chaque tube (3, 3') guidant le fluide frigorigène.

5. Echangeur de chaleur selon au moins l'une quelconque des revendications précédentes 1 à 4, **caractérisé en ce que** le canal de fuite (10, 10') formé par la déformation en saillie s'étend pratiquement de façon parallèle à la direction du flux d'air de l'évaporateur.
